# EUROPEAN PATENT APPLICATION

(11) **EP 2 757 284 A1**
(43) Date of publication of application: **23.07.2014**
(21) Application number: 13166084.7
(22) Date of filing: 30.04.2013
(51) Int. Cl.: F16F 15/32, G01M 1/32

(54) **Balancing weight application system**

(30) Priority: 18.01.2013 EP 13151925
(71) Applicant: WEGMANN automotive GmbH & Co. KG, 97209 Veitshöchheim (DE)
(72) Inventor: Bürgel, Hans-Ulrich, 97849 Roden (DE); Wagenschein, Dietmar, 97209 Veitshöchheim (DE)
(74) Representative: Lohr, Georg

(57) **Abstract**

A device for the application of balancing weights (10) to the rim of a vehicle wheel comprises a program controlled manipulator device with a balancing weight application head (20). The application head (20) first picks up balancing weights (10) from a dispenser and it is then transported by the manipulator device to the rim, where it applies the balancing weights (10) to the rim.

## Description

### Field of the invention

The invention relates to an automated handling system for applying balancing weights to rims of vehicle wheels.

### Description of the related art

A device for the application of balancing weights to go vehicle wheels is disclosed in US 8,336,379 B2. A program-controlled manipulator device includes a movable working arm having a balancing head. The balancing head feeds a continuous weight strand of self-adhesive weights and applies these to a rim of a wheel. The drawback is that the strand of weights may only be delivered to specific rims and to specific locations thereof. Furthermore, the delivered strand of weights may have an optical appearance, which is often not desired.

### Summary of the invention

The problem to be solved by the invention is to provide a device and a method for applying individual balancing weights to rims of vehicle wheels. Such individual balancing weights preferably are pre-fabricated and have predetermined sizes and weights. Such balancing weights may also be made in various shapes and colors resulting in an aesthetic appearance.

Solutions of the problem are described in the independent claims. The dependent claims relate to further improvements of the invention.

A balancing weight application head is preferably attached to a program controlled manipulator device. The balancing weight application head may pick up at least one individual balancing weight which my may be provided by a balancing weight dispenser. While the manipulator device moves the application head to the vehicle wheel, the balancing weight is firmly held by the application head. After the application head has been brought to the desired location for placing the balancing weight, the balancing weight is attached to the rim. Thereafter, the balancing head may be returned to the dispenser for picking up the next balancing weight. The balancing weight application head may also hold a plurality of balancing weights, therefore reducing movement time by the manipulator device. There may be different embodiments of the application head. The application head preferably has at least one means for holding a balancing weight at the application head and at least one means for pressing the balancing weight to a rim of a vehicle wheel. Both functions may be performed by the same means.

A further aspect of the invention is a method of applying balancing weights to the rim of the tribute by using an application head.

According to a further aspect of the invention, an intermediate carrier is provided for attaching the balancing weights. First, the intermediate carrier, to which the balancing weights are attached, is located within the rim. Then the intermediate carrier is expanded until the balancing weights touch the rim and are firmly pressed to the rim. Then the intermediate carrier may be deflated.

A further aspect of the invention is a method of applying balancing weights to the rim of the tribute by using an intermediate carrier.

### Description of Drawings

In the following, the invention will be described by way of example, without limitation of the general inventive concept, on examples of embodiment with reference to the drawings.
Figure 1 shows a balancing weight and an application head of a first embodiment.
Figure 2 shows the basic function of the holding pins.
Figure 3 shows a further embodiment of an application head.
Figure 4 shows another embodiment with a plurality of pressure pieces.
Figure 5 shows a further embodiment with vacuum holder.
Figure 6 shows another embodiment with vacuum holder.
Figure 7 shows an embodiment with permanent magnet.
Figure 8 shows an embodiment with solenoid.
Figure 9 shows an embodiment with three holding pins.
Figure 10 shows a clip-on balancing weight held by three holding pins.
Figure 11 shows the embodiment of figure 10 in a top view.
Figure 12 shows another embodiment of a balancing weight application device.
Figure 13 shows an intermediate step for applying balancing weights.
Figure 14 shows the final step for applying balancing weights.
Figure 15 shows an embodiment of an application tool for balancing weights.
Figure 16 shows the first step of attaching the balancing weight.
Figure 17 shows the next step of attaching a balancing weight.
Figure 18 shows the attached balancing weight.

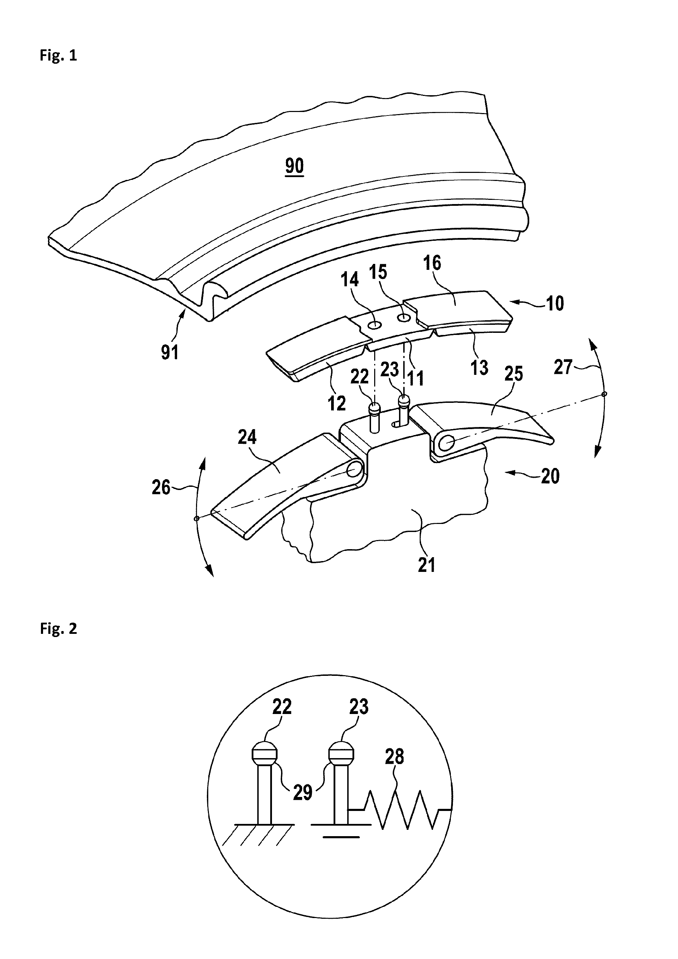

In figure 1, a first embodiment is shown. A first balancing weight 10 has a center section 11 and at least one side section 12, 13. The center section 11 has at least one hole 14, 15. Preferably, there are two holes. Whereas in the center section 11 preferably has a standard size and a standard location of the at least one hole 14, 15, the sections 12, 13 may vary in size with the weight of the balancing weight. There may be further side sections besides of the side sections 12 and 13, which is specifically useful for heavy balancing weights. Low weight balancing weights may have a slightly extended center section without side sections. The balancing weight has an attachment surface for attachment to the rim of a vehicle wheel, which preferably bears an adhesive tape 16, also called self-adhesive tape. In this figure, the adhesive tape is shown partially removed to show the holes 14, 15. It is preferred, if the adhesive tape covers all the attachment surface, and therefore also covers the holes. The application head 20 has a base 21 having at least one holding pin 22, 23. The holding pins 22, 23 preferably may penetrate into the holes 14, 15. Furthermore it is preferred, if at least one pressure lever 24, 25 is provided for pressing the balancing weight against the mounting surface 91 of rim 90. The holding pins 22, 23 fit into the holes 14, 15 of the balancing weights and allow holding of the balancing weight at the application head during transport of the balancing weight from the dispenser to the rim. Preferably, at least one of the holding pins 22, 23 is movable to generate some retention force within the holes 14, 15 to clamp the balancing weight. In the embodiment shown, the holding pin 22 is fixed, while the holding pin 23 is movable. In another embodiment, at least one of the holding pins may have a conical shape or any other shape suitable for a form fit or press fit with at least one of the holes. In a further embodiment at least one of the holding pins 22, 23 has such a length to contact the adhesive tape at the attachment surface through at least one of the holes to further increase the holding force of the balancing weight to the pin. The at least one pressure lever 24, 25 is provided for generating pressure to the whole surface of the balancing weight 10 and therefore to the whole area of the adhesive tape 16. To adapt the pressure lever 24, 25 to various rim diameters, it is preferred, if the pressure lever may be adjusted or moved. Such a preferred direction of movement is shown by the arrows 26 and 27. Instead of pressure levers, any other device performing a similar function may be used.

In figure 2, the basic function of the holding pins is shown. There is a first holding pin 22 may be fixed to the base 21 of the application head, the second holding pin 23 may be movable, slidable or tiltable and preferably is spring-loaded by a spring 28 against the base 21. Due to the spring loading, the application head may simply be pressed against the balancing weight in the dispenser. The holding pins will slide into the holes and the spring 28 will assert enough force to press the holding pins against the walls of the holes and to hold the balancing weight at the application head. After the balancing weight has been pressed to the rim, the adhesive tape holds the balancing weight thereon. Now, the application head may simply be pulled off and the holding pins will slide out of the holes. Furthermore, it is preferred, if the holding pins each have a head 29, which improves holding of the balancing weight at the application head. Each head 29 may have a rounded shape to simplify insertion of the holding pin into the holder of the balancing weight. Preferably, the holding pins have a conical shape. Most preferably, they may be pressed into corresponding holes of the balancing weights, establishing a relatively tight fit. Furthermore, there may be some structure for increasing friction and improving the holding function.

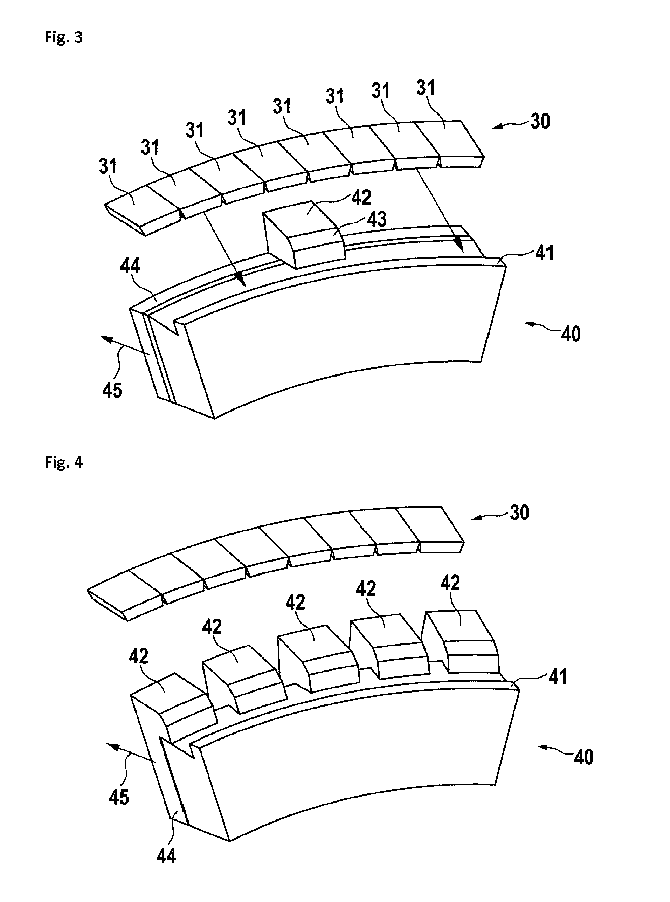

In figure 3, another embodiment of an application head 40 is shown. This application head is suitable for handling balancing weights without holes. Such balancing weights preferably have a plurality of segments. These segments may have the same weight and size or they may be different. Here, the balancing weights are clamped between an edge or sidewall 41, which may be part of the base 21, and which may improve alignment of the balancing weight, and a pressure piece 42. This pressure piece preferably may have at chamfered edge 43, which allows simple insertion of the balancing weights. The pressure piece 42 may be held by a lever element 44, which may be moved into the direction indicated by arrow 45 to increase the gap between the pressure of peace 42 and the edge 41 to fit balancing weights in-between. Preferably, the pressure piece and/or the lever element may be spring-loaded. Either there may be a separate spring or the lever element itself may act as a spring. The pressure piece 42 may be varied in its width. In a first embodiment it may be as shown, therefore clamping only one or two segments of the balancing weight. In another embodiment, the pressure piece may be broader to clamp a plurality of segments or even the whole balancing weight. Instead, by using a pressure piece, the balancing weight may be held by using the adhesive surface, or an edge thereof.

In figure 4, a further modification of the embodiment of figure 3 is shown. Here a plurality of pressure pieces 42, preferably having individual lever elements 44 are provided. As each lever element will be adjustable to the width of the balancing weight section it is holding, a constant holding force may be applied by each pressure piece independent of mechanical tolerances of the balancing weight. Therefore, this embodiment results in a better holding of balancing weights.

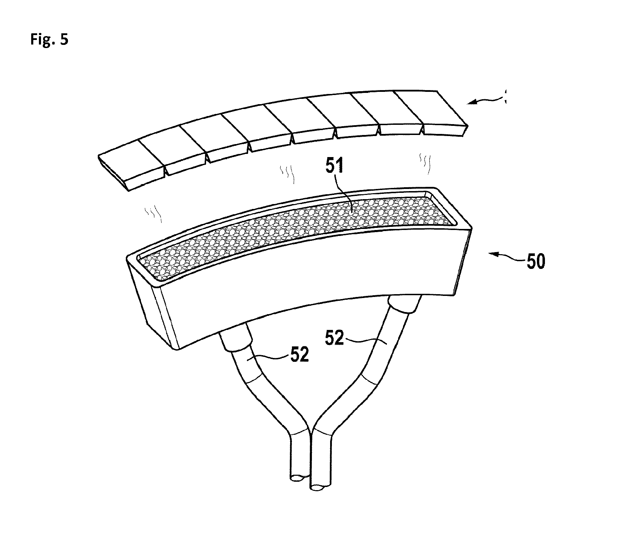

In figure 5, another embodiment of an application head 50 having a vacuum holder is shown. Preferably, the application had has an empty inner space and or air duct which may be connected to at least one vacuum pipe which may be connected to a vacuum pump. Due to the vacuum of the application head, the balancing weights are held thereto. The vacuum may be switched on and off for holding and for releasing the balancing weigh. Alternatively, there may be a continuous vacuum, if the retention force of the adhesive tape is higher than the vacuum force. It is preferred, if there is a porous surface 51 for distributing the vacuum over the surface of the application head 51. Such a process surface may be a fibrous web or a porous sintered material. It is preferred, if the balancing weights do not have holes, as this may lead to loss of vacuum.

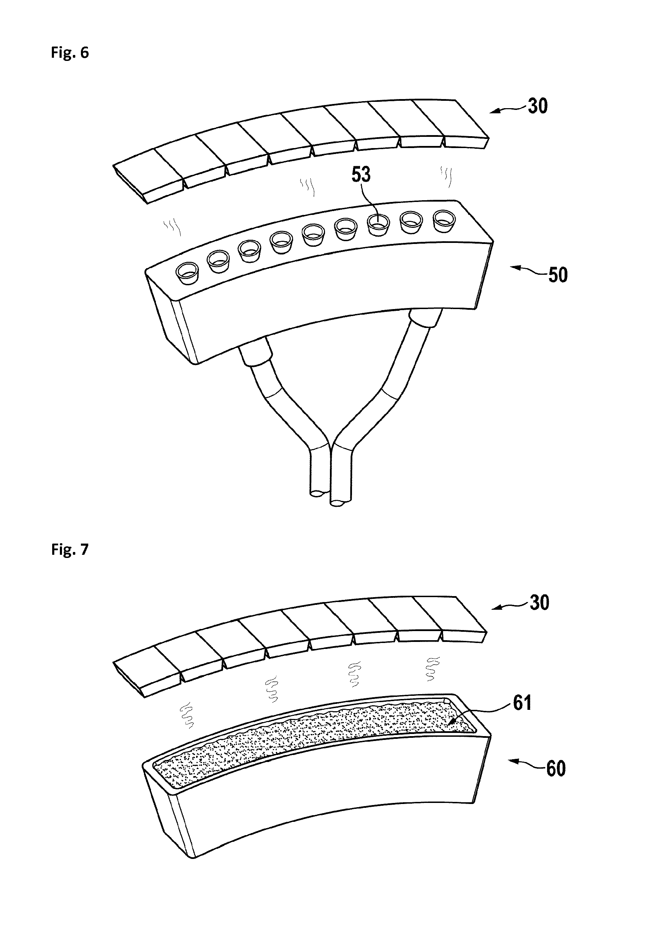

In figure 6, a further embodiment of an application head the 50 is shown. Here a plurality of suction cups 53 is provided to hold the balancing weights 30.

Another embodiment of an application head 60 having at least one permanent magnet 61 is shown in figure 7. Here, the balancing weights 30 are held by magnetic force. Preferably, the magnetic force is less than the retention force of the balancing weights held by the adhesive tape to the rim. The balancing weights 30 preferably comprise magnetic material. This magnetic material may be part of the body of the balancing weights or included therein. The magnetic material may also be at the outside of the balancing weights and may be part of coating or painting of the balancing weights.

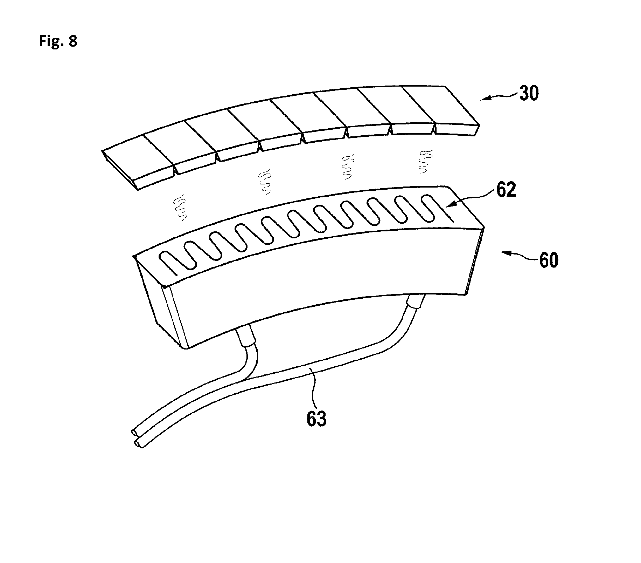

A further embodiment according to figure 8 comprises a solenoid. This may be combined with a permanent magnet. Preferably, a solenoid coil 62 is provided in the application head 60. Electrical current is delivered by cables 63. The magnetic force applied it to the balancing weights may be switched on or off by switching the electric current through the solenoid.

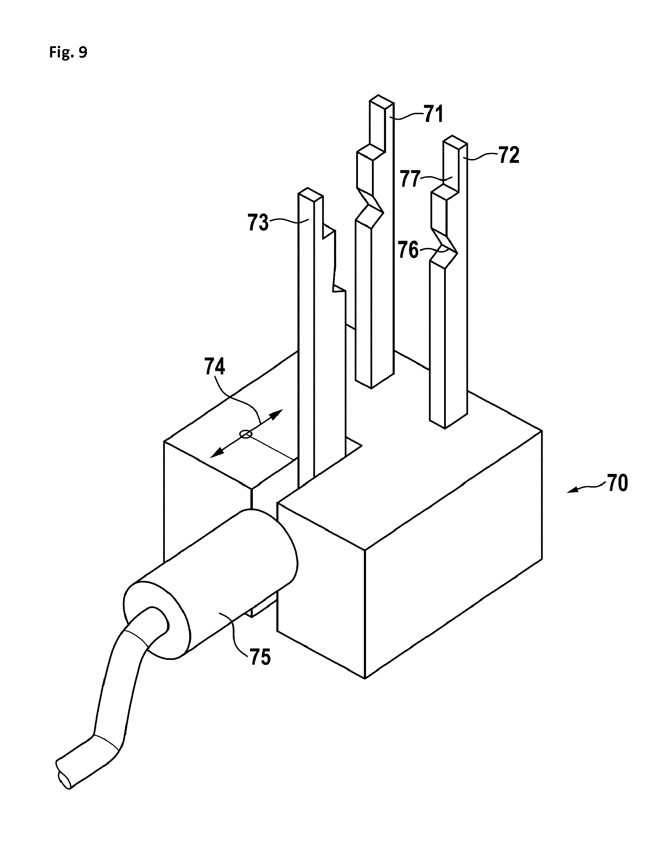

Another embodiment according to figure 9 includes a plurality of holding pins, preferably three or four pins. Most preferably, the application head has a pair of fixed pins 71, 72 and one or two movable pins 73. Preferably, the movable pin can be moved to words or away from the fixed pins to adapt the gap between the fixed pins and the movable pin to the size of a balancing weight. The balancing weight may be clamped in between the pins. It is preferred, if the movable pin is driven by an actuator, which may be a solenoid, a motor or a hydraulic or pneumatic drive. Is further preferred, if at least one fin, preferably or pins have a holding structure 76, 77 for holding the balancing weight. Such a holding structure may comprise one or a plurality of at least one of notches, recesses, holes, structured surfaces causing higher friction. Preferably, a notch 76 may be provided for balancing weights, which are clipped to a rim, while a recessed structure 77 may be used to hold adhesive balancing weights. It is also within the scope of this invention to exchange the fixed and movable pins, therefore moving the fixed pins and fixing the movable pins.

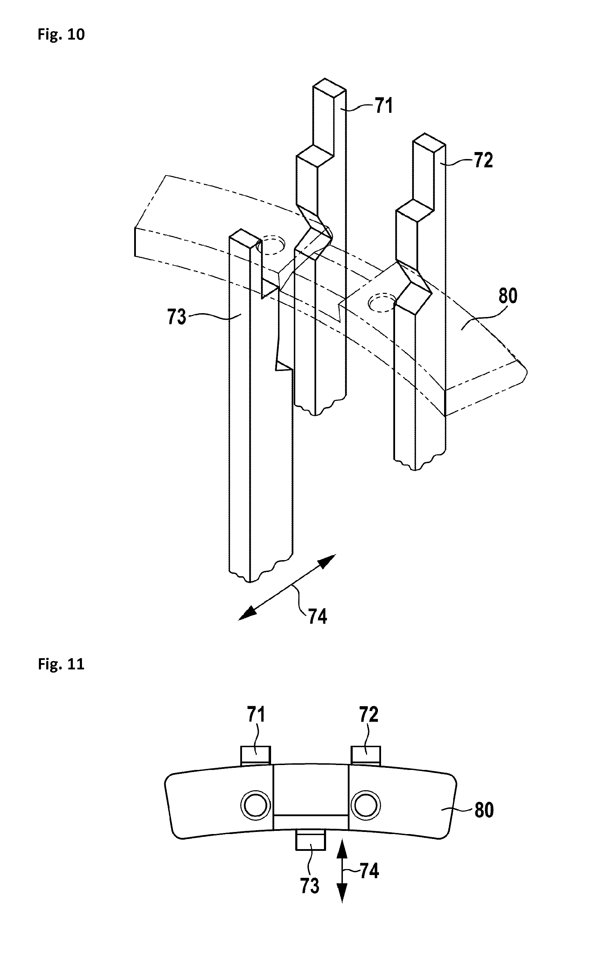

Figure 10 shows a clip-on balancing weight 80 held by two fixed pins 71, 72 and a movable pin 73.

Figure 11 shows the same balancing weight 80 held by three pins in a top view.

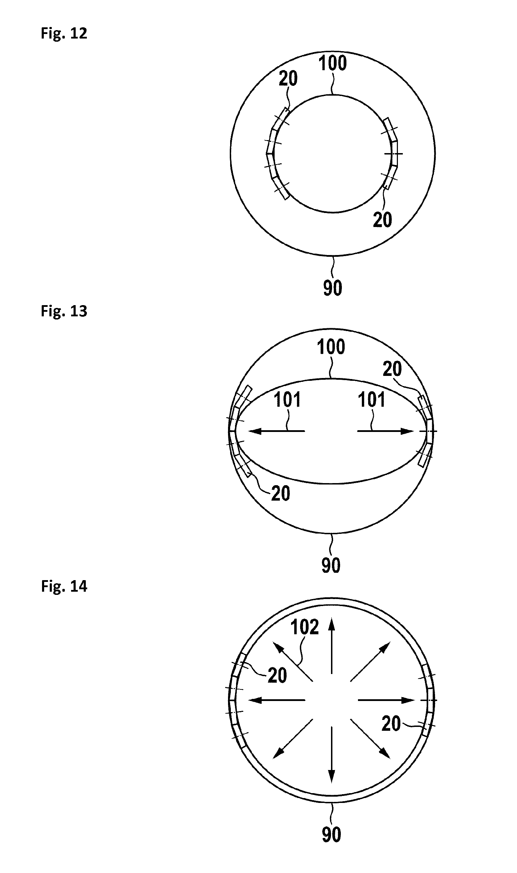

Figure 12 shows a further embodiment of a weight that balancing weight-mounting device. An intermediate carrier 100 is provided within the rim 90. The outer diameter of the intermediate carrier is smaller than the in the diameter of the rim. The intermediate carrier 100 holds at least one or a plurality of balancing weights 20. These may be any type of balancing weights, like the balancing weights shown herein, preferably adhesive balancing weights. The balancing weights may be attached to the intermediate carrier 100 by using an application head according to any one of the previous embodiments. The intermediate carrier may be some tire or balloon, which may be expanded by compressed air or liquid. It may also be expanded by using any pressure cylinder, which may be driven by at least one of spring forces, compressed air or liquids. Alternate drive means include a motor or solenoid.

Figure 13 shows the next step in applying balancing weights. Here the intermediate carrier is expanded until it contacts the inner surface of the rim 90. This will apply the balancing weights to the rim.

Figure 14 shows the final step of applying the balancing weights. The intermediate carrier is fully expanded and preferably, uniform pressure indicated by pressure arrows 102 is applied to the surface of the rim, uniformly pressing the balancing weights to the rim. After that, the intermediate carrier may be deflated and removed from the rim.

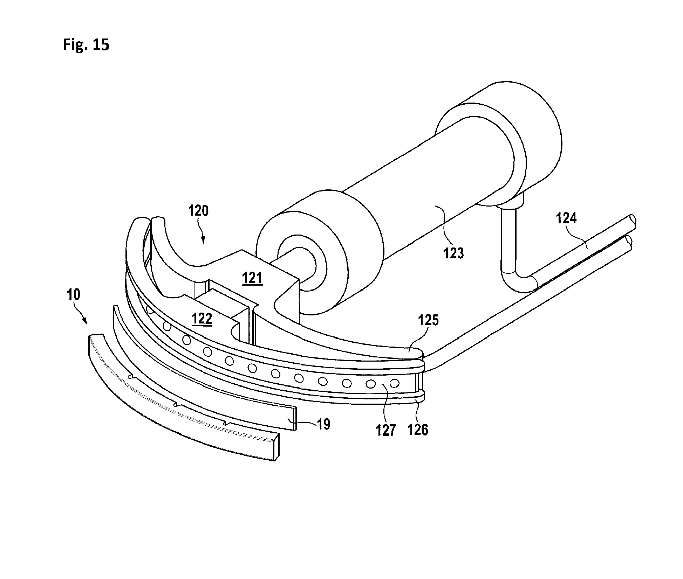

Figure 15 shows an embodiment of an application tool for balancing weights. The tool has an application head 120 comprising a balancing weight applicator 122 and a thrust plate 121. The balancing weight applicator 122 has a surface as further described herein to hold balancing weights by any of the means described herein. Preferably, there are vacuum outlets 127 or vacuum pipes at the surface for holding balancing weights by vacuum. There may be an additional layer 19 on the surface of the applicator for evenly distributing vacuum and/or protecting the balancing weights. An actuator 123 may be provided for actuating the application head. The actuator may be a hydraulic or pneumatic actuator, which may be supplied by pipes 124. In an alternative embodiment, the actuator may be an electric actuator. In this case, there would be at least one supply cable 124. The application head 120 may also work without the actuator shown. For this purpose, it may for example be connected to an industrial robot. The thrust plate 121 and the applicator 122 are mounted slidable against each other, preferably into the direction of a main axis which is the actuators actuating axis. When applying a balancing weight 10 to a rim, the balancing weight is placed at the applicator 122 and held by vacuum, magnetic force or any other means described herein. Then the applicator is brought into close proximity to the location of the rim, to which the balancing weights are to be applied. Preferably, the outer radius of the applicator is less than the inner radius of the rim. In this case, the balancing weight closest to the center of the applicator touches the rim first. Then, the thrust plate is further pressed into the direction of the rim. This causes the side wings of the thrust plate 125 to contact the side wings of the applicator 126 and to push them into the direction of the rim. This results in gradually pressing balancing weights starting from the center balancing weight outwards to the rim unto all balancing weights have been pressed to the rim. In this state, the radius of the applicator 126 is approximately equal to the radius of the rim. After all balancing weights have been pressed to the rim, the thrust plate is released, further releasing the applicator. To simplify handling movement, it is preferred, if there is a spring between the thrust plate and the applicator to hold the thrust plate and applicator in such a distance from each other, that their side wings do not touch each other or at least put no significant force to each other. When actuating the thrust plate 121, the spring will be depressed allowing the thrust plate to assert force to the applicator. In another embodiment instead of a spring, the elasticity of the applicator's side wings is used. In this case, the elastic side wings of the applicator will push the thrust plate back when idle.

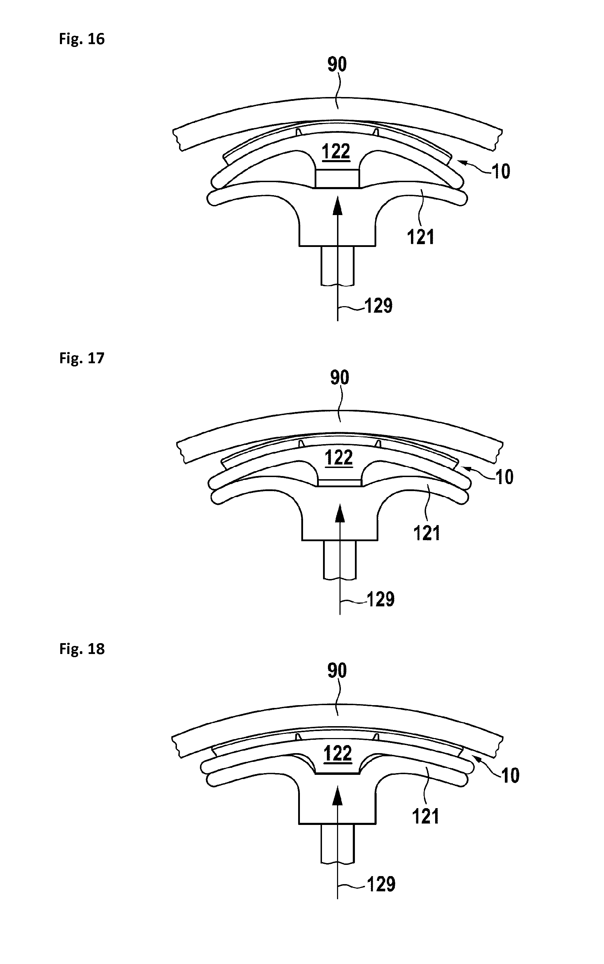

In figure 16, a first step of the previous described method is shown. Here, the center balancing weight of three balancing weights 10 touches the rim 90, whereas the other balancing weights are distant from the rim.

In figure 17, a next step is shown. Here, the thrust plate 121 has further been moved into the direction 129. The side wings of the thrust plate 121 assert pressure on the side wings of the applicator 122, bending them towards the rim and pressing the balancing weights at the sides of the center balancing weight to the rim.

In figure 18, the finally attached balancing weights are shown. For this step, the thrust plate 121 has still been moved further into the direction 129. It now presses by its side wings the applicator's side wings in their full length to the balancing weights and the rim, causing the balancing weights to be pressed and to adhere to the rim.

The embodiments disclosed herein may be combined together. For example, an application head may have vacuum and magnetic holding means. Furthermore, any application head may have holding pins and/or pressure levers.

### List of reference numerals

- 10: balancing weight
- 11: center section
- 12, 13: first side section
- 14, 15: holes
- 16: adhesive tape
- 20: application head
- 21: base
- 22, 23: holding pins
- 24, 25: pressure lever
- 26, 27: arrows indicating direction of movement
- 28: spring
- 29: holding pin head
- 30: balancing weight
- 40: application head
- 41: edge
- 42: pressure piece
- 43: chamfered edge of pressure piece
- 44: lever element
- 45: arrow indicating direction of movement
- 50: application head with first vacuum holder
- 51: porous surface
- 52: vacuum pipes
- 60: application head containing a magnet
- 61: permanent magnet
- 62: solenoid
- 63: cables
- 70: application head with holding pins
- 71, 72: fixed pins
- 73: movable pin
- 74: arrow indicating direction of movement
- 75: actuator
- 76, 77: holding structure
- 80: clip-on balancing weight
- 90: rim of a vehicle wheel
- 91: mounting surface
- 100: intermediate carrier
- 101: direction of expansion
- 102: direction of pressure
- 120: application head
- 121: thrust plate
- 122: applicator
- 123: actuator
- 124: cables, pipes
- 125: side wing of thrust plate
- 126: side wing of applicator
- 127: vacuum outlet

## Claims

1. A device for the application of balancing weights (10) comprising a program controlled manipulator device with a balancing weight application head (20) for picking up balancing weights and applying the balancing weights to a rim of a vehicle wheel comprising at least one means (22, 23) for holding at least one individual balancing weight at the application head and at least one means (24, 25) for pressing the balancing weight to the rim of the vehicle wheel.

2. Device according to claim 1,
**characterized in, that**
at least one means for holding at least one individual balancing weight (10) at the application head (20) is the at least one means for pressing the balancing weight to the rim of the vehicle wheel.

3. Device according to any one of the previous claims,
**characterized in, that**
the at least one means for pressing the balancing weight to the rim of the vehicle wheel comprises two pressure levers (24, 25).

4. Device according to any one of the previous claims,
**characterized in, that**
at least one means for holding at least one individual balancing weight at the application head (20) comprises two holding pins (22, 23), which fit into holes of the balancing weight, whereby at least one of the holding pins (23) is spring loaded.

5. Device according to claim 4,
**characterized in, that**
at least one of the holding pins (22, 23) has a conical shape.

6. Device according to any one of the previous claims,
**characterized in, that**
at least one means for holding at least one individual balancing weight (10) at the application head (20) comprises at least one holding pin (22, 23) having a length to contact an adhesive tape at the attachment surface of the balancing weight (10) through at least one hole (14, 15) to further increase the holding force of the balancing weight to the pin.

7. Device according to any one of the previous claims,
**characterized in, that**
at least one means for holding at least one individual balancing (10) weight at the application head comprises a vacuum holder (50).

8. Device according to any one of the previous claims,
**characterized in, that**
at least one means for holding at least one individual balancing weight (10) at the application head comprises a magnetic holder (60).
A device for the application of balancing weights comprising an intermediate carrier (100), which is located within the rim, holds the balancing weights and can be expanded such, that it has the same outer diameter as the inner diameter of the rim is and therefore presses the balancing weights to the rim.
